# EUROPEAN PATENT SPECIFICATION

(11) **EP 3 403 792 B1**
(45) Date of publication and mention of the grant of the patent: **30.12.2020**
(21) Application number: 18170984.1
(22) Date of filing: 07.05.2018
(51) Int. Cl.: B27M 1/08, B27B 31/00, B27B 31/08, B23D 59/00, B28D 7/04, B23Q 17/22, B23Q 17/24, B27B 5/06, G06T 7/62

(54) **MACHINE FOR PROCESSING WOODEN PANELS AND THE LIKE, AND FOR DETECTING THE POSITIONING OF THE PANELS AFTER THE PROCESSING, AND OPERATION METHOD THEREOF**
MASCHINE FÜR DIE BEHANDLUNG VON HOLZPANEELEN ODER ÄHNLICHEN PANEELEN UND FÜR DIE POSITIONSERKENNUNG NACH DER BEHANDLUNG UND ARBEITSVERFAHREN DAFÜR;
MACHINE POUR TRAITER DES PANNEAUX DE BOIS OU SIMILAIRES ET POUR DÉTECTER LES POSITIONS DES PANNEAUX APRÈS LE TRAITEMENT; AINSI QUE LA MÉTHODE CORRESPONDANTE;

(30) Priority: 19.05.2017 IT 201700054819
(43) Date of publication of application: 21.11.2018
(73) Proprietor: SCM Group S.p.A., 47921 Rimini (RN) (IT)
(72) Inventor: RATTI, Federico, 47921 RIMINI (IT); ROTA, Giambattista, 47921 RIMINI (IT)
(74) Representative: Tiburzi, Andrea

(56) References cited:
- WO-A1-99/61212
- WO-A1-2005/010628
- DE-A1-102014 204 695
- JP-A- 2010 110 789
- US-A1- 2012 227 866
- US-A1- 2013 131 853

## Description

This invention relates to a machine for processing wooden panels and the like, according to the preamble of claim 1, and to an operation method of a machine, according to the preamble of claim 12. Such a machine and such a method are known from the document US2013/0131853 A1.

This invention also relates to method for operation of the machine.

More in detail, the invention relates to a machine of the said type, designed and manufactured in particular for processing panels made of wood, plastic, metal, fibreglass, glass and the like, and for the subsequent detection of the positioning of the panels after the processing.

The machine according to the invention is equipped with a working plane for supporting said panels, a unit for processing said panels, and a unit for detecting the positioning of said panels resulting from the processing.

More specifically, said processing unit is a unit which performs a *nesting* type of processing, which therefore receives a single panel in input and provides a plurality of panels separate from each other as output, having dimensions less than those of the single panel provided in input to the processing unit, and also having dimensions different from each other.

The description below relates to a machine for detecting the positioning of the panels as output from a processing unit of the *nesting type,* but it is quite apparent how the same should not be considered limited to this specific use.

As is well known, a *nesting* type processing unit currently comprises a *nesting* type processing module and a working plane for supporting the panels to be processed.

Said working plane extends from the input to the *nesting* type processing module, at which the panels to be processed are loaded, one at a time, up to the output from the *nesting* type processing module.

As output from the *nesting* type processing module there is a plurality of cut panels, separate from each other, arranged in a disorderly mode on the working plane and without a predetermined positioning.

For this reason, in order for said plurality of panels to be transported and processed in subsequent processing stations, it is necessary to assign a spatial reference to said cut panels which can be recognised by the subsequent processing stations.

Currently, each panel of the plurality of cut panels is picked up by a pick-up device, typically a *robot,* and inserted on a reference element, a so-called trestle, for assigning a recognisable spatial reference.

Subsequently, the pick-up device picks up each cut panel from the reference element and positions it on the supporting plane of a subsequent processing station.

Said operation for assigning a spatial reference is performed for each panel of the plurality of cut panels, obtained from the processing of the initial single panel.

It is clear how this procedure is onerous both in terms of the time necessary for assigning a spatial reference to all the panels of the plurality of cut panels and the complexity of the entire procedure.

The relevant prior art includes also the patent applications US 2013/131853 A1, WO 2005/010628 A1, WO 99/61212 A1, US 2012/227866 A1, DE 10 2014 204695 A1 and JP 2010 110789.

In light of the above, the aim of the invention is therefore to provide a machine for processing panels, made of wood and the like, and for subsequently detecting the positioning of the cut panels obtained after the processing of the initial single panel.

Another aim of the invention is to provide a method for operating said machine for processing panels.

A specific object of the invention is therefore a machine for processing at least one panel, made of wood, plastic, metal, fibreglass, glass and the like, and for detecting the positioning of the processed panel after the processing comprising a unit for processing said at least one panel, which receives in input said at least one panel, and provides as output a plurality of portions, wherein the entire panel has been divided according to a predetermined cutting pattern, a unit for picking up and transporting said plurality of portions for picking up said plurality of portions and transporting said plurality of portions towards one or more further processing stations outside said machine, a logic control unit, operatively connected with said processing unit and pick-up and transporting unit, and equipped with a programme for controlling said processing unit and pick-up and transporting unit, a working plane for supporting said at least one panel and said processed panel, which extends between said processing unit and pick-up and transporting unit, comprising a detection unit, configured for detecting the data relative to the position of each portion of said plurality of portions on said working plane, comprising a unit for processing the data detected and reconstruction of images configured for receiving said data detected by said detection unit for reconstructing the image of the positioning of said plurality of portions on said working plane, and said logic control unit being configured for receiving said reconstructed image and sending control signals to said pick-up and transporting unit, containing the information relative to the image and to the position of each portion of said plurality of portions on said working plane.

Further, according to the invention, said detection unit comprises said unit for processing data detected and reconstructing images.

Also, according to the invention, said logic control unit comprises said unit for processing data detected and reconstructing images.

Preferably, according to the invention, said unit for detecting the positioning of said processed panel is positioned downstream of said processing unit.

Further, according to the invention, said detection unit performs a linear scanning of said plurality of portions, on said working plane.

Also, according to the invention, said machine can comprise means for the sliding of said plurality of portions on said working plane, and said detection unit can carry out said linear scanning during the sliding of said plurality of portions on said working plane.

Preferably, according to the invention, said machine can comprise means for moving said detection unit with respect to said working plane, and said detection unit can carry out said linear scanning whilst it is moving with respect to said working plane.

Further, according to the invention, said pick-up and transporting unit picks up each portion of said plurality of portions, according to a predetermined orientation corresponding to said control signals received from said logic control unit.

According to the invention, said working plane comprises, at said detection unit, a scanning zone made of transparent or semi-transparent material, and said working plane is equipped, at said detection unit, with a plurality of light sources, configured for emitting light through said scanning zone for radiating said plurality of portions, during the sliding on the scanning zone.

Preferably, according to the invention, said plurality of light sources has a linear arrangement, in particular each individual light source is positioned next to, immediately after, the previous light source.

Further, according to the invention, said detection unit comprises at least one video camera for scanning said plurality of portions, configured for detecting coordinates of the centre of each portion of said plurality of portions, on said working plane and the inclination angle of a predetermined side of each portion of said plurality di portions, with respect to said cutting pattern.

A further object of the invention is a method of operation of a machine for processing at least one panel, made of wood, plastic, metal, fibreglass, glass and the like, and for detecting the positioning of the processed panel after processing comprising the following steps:
(a) dividing at least one panel on a working plane into a plurality di portions, according to a predetermined cutting pattern;
(b) detecting a respective group of data relative to the position of each portion of said plurality of portions with respect to said cutting pattern;
(c) associating said group of data to each portion of said plurality of portions;
(e) reconstructing an image relative to said plurality di portions on said working plane;
(f) selecting the sequence of portions of said plurality di portions to pick up from said working plane and the orientation with which to pick up each portion of said plurality di portions, by a pick-up and transporting unit, as a function of said image reconstructed in said step.

Also, according to the invention, said group of data detected in said step (b) are the coordinates of the centre of each portion of said plurality di portions, on said working plane and the inclination angle of a predetermined side of each portion of said plurality di portions, with respect tot said cutting pattern.

The invention is now described, by way of example and without limiting the scope of the invention, with reference to the accompanying drawings which illustrate preferred embodiments of it, in which:

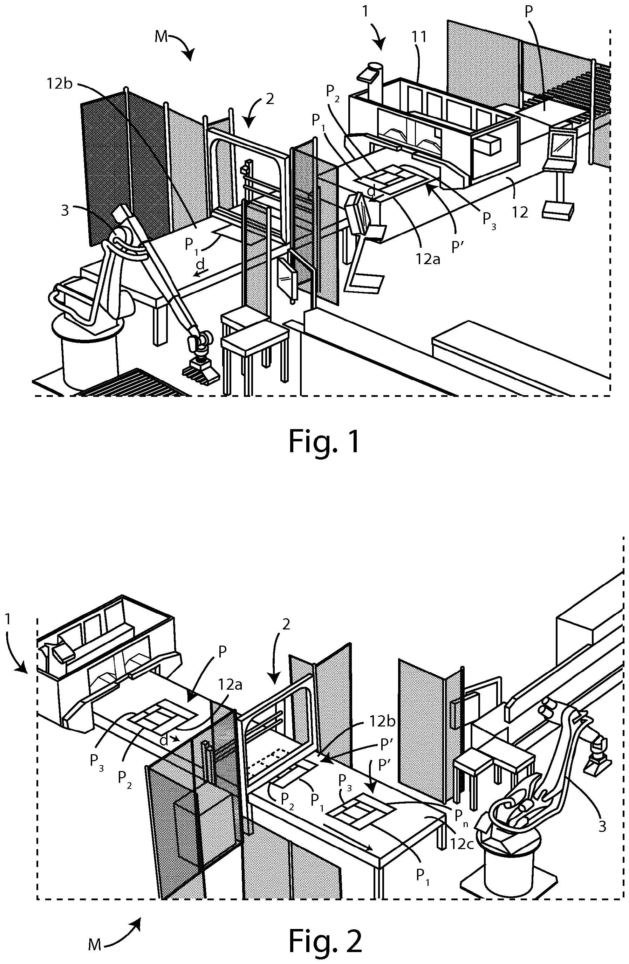

Figure 1 shows a perspective right-hand side view of the machine according to this invention for processing panels, made of wood and the like, and for detecting the positioning of the panels after the processing;
Figure 2 shows a perspective left-hand side view of the machine of Figure 1;

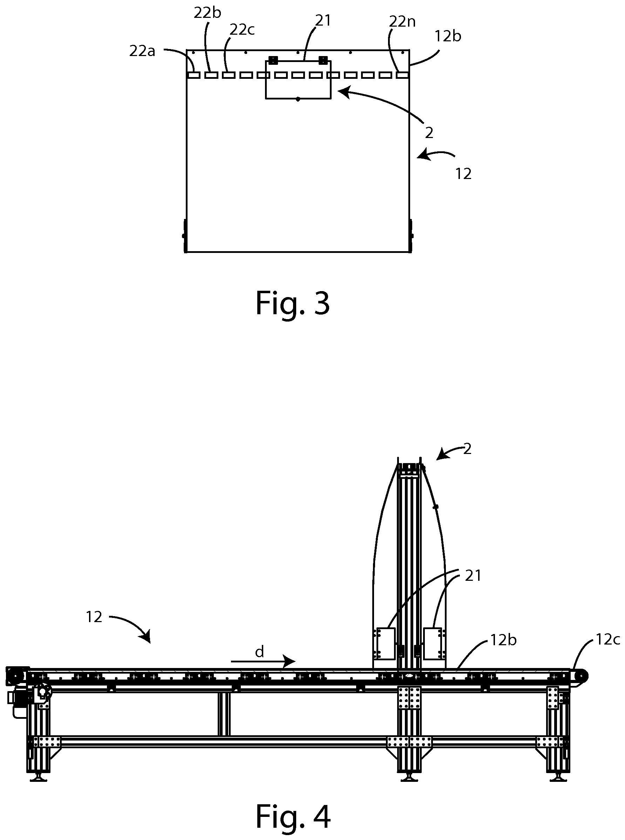

Figure 3 shows a schematic view from above of a portion of the machine of Figure 1;
Figure 4 shows a schematic side view of a portion of the machine of Figure 1;
Figure 5 shows a detail of Figure 4; and
Figure 6 shows a schematic view from above of the plurality of portions of panels processed by the machine according to the invention.

In the various figures similar parts are labelled with the same reference numerals.

With reference to the accompanying drawings, the machine M for processing panels, made of wood and the like, and for detecting the positioning of the panels after processing, according to this invention, comprises a *nesting* type unit 1 for processing a single panel P, a unit 2 for detecting the positioning of the processed panel P' downstream of the *nesting* type processing unit 1, a unit 3 for picking up and transporting said processed panel P', a working plane 12 shared by said units described, and a logic control unit for the operation of said machine M, not shown in the drawings.

Said working plane 12 comprises a working zone 12ₐ, on which are loaded the panels to be processed, one at a time, positioned at said processing unit 1, and a scanning zone 12_{b}, positioned at said detection unit 2.

Said working plane 12, and/or said processing unit 1, also comprises movement means, not shown in the drawings, for moving said processed panel P' from said working zone 12ₐ to said scanning zone 12_{b}.

Said scanning zone 12_{b} of said working plane 12 is made of transparent or semi-transparent material, for the purposes described in detail below, and, according to a preferred embodiment, it is made in the form of a conveyor belt for moving said processed panel P' in a continuous way.

Said working zone 12ₐ and said scanning zone 12_{b} can be interrupted by a discontinuity, with dimensions such as to prevent the falling of said processed panel P', being made of two different devices.

A plurality of labels are applied on each panel P, comprising an identification code of the QR - *Quick Response code* or *barcode* type, on each portion which will be obtained from the single panel P after processing, in order to subsequently recognise the single cut portion and direct it to the subsequent processing.

According to another embodiment, said labels can also be applied after the processing.

According to another embodiment, said identification codes can also be printed directly on said single panel P at said portions.

Said *nesting* type processing unit 1 is equipped with a plurality 11 of processing tools which process said panel P in input, according to a predetermined processing programme, or cutting patterns, providing as output a processed panel P' comprising a plurality of portions of or parts or cut panels P₁, P₂, ..., Pₙ.

Said cut panels P₁, P₂, ..., Pₙ have different dimensions from each other and dimensions less than those of said panel P in input to said plurality 11 of processing tools.

Moreover, after the processing, said cut panels P₁, P₂, ..., Pₙ can move and separate from each other, thus adopting a positioning not known on said working plane 12.

Said processed panel P' is transported on said working plane 12, towards the input of said detection unit 2.

Said detection unit 2 comprises a viewing system of known type, comprising in turn at least one video camera 21 for detecting data, in particular for scanning objects such as said plurality of panels P₁, P₂, ..., Pₙ and identification codes applied on each of these, and a unit for processing the data and reconstructing images, as described in detail below.

According to a further embodiment of the invention, said logic control unit of said machine M can comprise said unit for processing data detected and reconstructing images.

At said detection unit 2, said working plane 12 comprises, in said scanning zone 12_{b}, a plurality of light sources 22ₐ, 22_{b}, 22c, ..., 22ₙ of LED type or the like.

According to a further embodiment of the invention, said detection unit 2 can be moved relative to said working plane 12, by means of movement means.

As described above, and according to the invention, said scanning zone 12_{b} of said working plane 12 is made of transparent or semi-transparent material, in such a way that the light emitted by said plurality of light sources 22a, 22_{b}, 22c, ..., 22ₙ can pass beyond said working plane 12 for radiating said plurality of panels P₁, P₂, ..., Pₙ and can be detected by said video camera 21 of said detection unit 2.

According to the embodiment described, said plurality of light sources 22a, 22_{b}, 22c, ..., 22ₙ has a linear arrangement, in particular each individual light source 22ₓ₊₁ is positioned next to, immediately after, the previous light source 22ₓ.

According to a second embodiment of the invention, said plurality of light sources 22a, 22_{b}, 22c, ..., 22ₙ can be positioned on several rows parallel to each other, or in the form of a matrix or the like.

Said plurality of light sources 22a, 22_{b}, 22c, ..., 22ₙ is used for emitting rays of light upon the passage of said processed panel P', as described in detail below.

Said pick-up and transporting unit 3 is a manipulator of the anthropomorphous or gantry or *robot* type, including Cartesian *robots,* which picks up each panel of said plurality of cut panels P₁, P₂, ..., Pₙ to transport it towards a subsequent processing station, outside said machine M.

Said pick-up and transporting unit 3 receives the data processed by said detection unit 2 in such a way as to pick up exactly each panel of said plurality of cut panels P₁, P₂, ..., Pₙ, one at a time, according to the necessary orientation and to transport it following a predetermined positioning, functional for the subsequent processing, as described in detail below.

The operation of the machine M described above is as follows.

Said *nesting* type processing unit 1 receives in input a single panel P, positioned on said working plane 12, in particular on said scanning zone 12_{b}, already provided with labels or printed identification codes, as described above, or without labels or identification codes which can be applied or printed after the processing.

Said plurality of tools 11 cut said single panel P according to a predetermined pattern, or cutting pattern, in such a way as to obtain, as described above, a processed panel P' comprising a plurality of portions, parts or cut panels P₁, P₂, ..., Pₙ having dimensions less than that of said single panel P and dimensions different from each other.

Said processed panel P' is thus transported on said working plane 12, towards said detection unit 2.

As soon as said processed panel P' arrives close to said detection unit 2, said logic control unit activates the switching on of said plurality of light sources 22ₐ, 22_{b}, ..., 22_{c} which radiate the surface of said processed panel P', passing beyond the working plane 12 in said transparent or semi-transparent zone 12b.

Said detection unit 2 carries out a scanning, line by line, of said processed panel P', and, simultaneously of said plurality of cut panels P₁, P₂, ..., Pₙ, line by line, according to the operating principle of an optical reader of images, or *scanner,* during the sliding of said plurality of cut panels P₁, P₂, ..., Pₙ, on said working plane 12.

More specifically, said video camera 21 receives the reflection of light emitted by said plurality of light sources 22ₐ, 22_{b}, ..., 22_{c}, samples the entire length of said processed panel P', in particular detecting the perimeter and the coordinates of the centre of each panel of said plurality of cut panels P₁, P₂, ..., Pₙ and also the angle of inclination of a predetermined side of each panel of said plurality of cut panels P₁, P₂, ..., Pₙ, with respect to the initial pre-loaded cutting pattern.

Said video camera 21 sends said detected data to said unit for processing data detected and reconstructing images which carries out a comparison between the perimeter detected and the cutting pattern pre-loaded in said unit for processing data detected and reconstructing images.

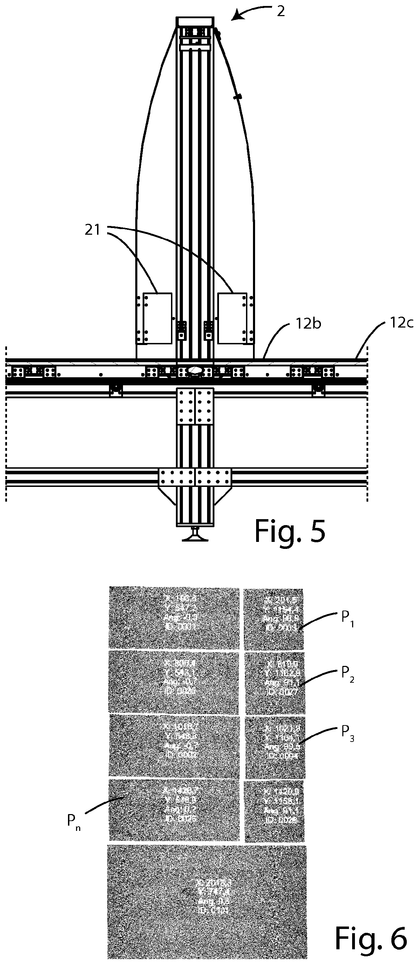

Knowing the sliding sped of said processed panel P' on said working plane 12, said unit for processing data detected and reconstructing images, using known algorithms for reconstructing images, reconstructs the entire image of said plurality of cut panels P₁, P₂, ..., Pₙ on said plane, and therefore the exact positioning of each panel of said plurality of cut panels P₁, P₂, ..., Pₙ on said working plane 12, as shown in Figure 6.

The frequency of sampling of the video camera 21 is within a range of 26 - 80 KHz, whilst the resolution expressed in pixel is within a range of 0.3 - 4 K.

The high frequency of sampling the high quantity of pixels determines the precision of the detection of the positioning of each panel of said plurality of cut panels P₁, P₂, ..., Pₙ.

Said reconstructed image of said plurality of panels P₁, P₂, ..., Pₙ on said working plane 12 and said identification code of each panel are sent to said logic control unit which associates each panel of said plurality of cut panels P₁, P₂, ..., Pₙ with the processing program of the subsequent processing stations, to which each panel is directed.

Said logic control unit sends said data regarding the positioning of each panel of the plurality of cut panels P₁, P₂, ..., Pₙ to said pick-up and transporting unit 3, which picks-up each of said panels according to a predetermined orientation and transports and sends it to the subsequent processing stations, according to a predetermined positioning, in such a way that each panel is correctly positioned for the subsequent processing, by other processing stations outside said machine M.

As is apparent from the above description, the machine for processing panels, made of wood and the like, and for detecting the positioning of the panels after the processing according to this invention, allows detection of the exact positioning on the working plane of each cut panel after *nesting* type processing, which generally separates from each other various parts of the original panel, causing a movement on the working plane.

The exact detection of the positioning of the single cut panels on the working plane allows the single cut panel to be picked up and sent to the subsequent processing stations according to a predetermined orientation, without the need to assign a new reference, thus speeding up the processing and minimising the risk of errors.

## Claims

1. Machine (M) for processing at least one panel (P), made in wood, plastic, metal, fiberglass, glass and the like, and for detecting the positioning of the processed panel (P') after the processing, comprising
a processing unit (1) of said at least one panel (P), which receives in said at least one panel (P), and which produces a plurality of portions (P₁, P₂, ..., Pₙ), the entire panel (P) has been subdivided into, according to a predetermined cutting pattern;
a pick-up and transporting unit (3) of said plurality of portions (P₁, P₂, ..., Pₙ), for picking up said plurality of portions (P₁, P₂, ..., Pₙ) and carrying said plurality of portions (P₁, P₂, ..., Pₙ) to one or more further processing stations outside said machine (M);
a logic control unit operatively connected to said processing unit (1) and pick-up and transporting unit (3), said logic control unit being provided with a program for controlling said processing unit (1) and pick-up and transporting unit (3);
a working plane (12), for supporting said at least one panel (P) and said processed panel (P'), extending between said processing unit (1) and pick-up and transporting unit (3), said machine (M) being **characterized**
**in that** it comprises a detection unit (2), comprising a plurality of light sources (22a, 22_{b}, 22c, ..., 22ₙ) and at least one video camera (21), configured to detect the data relating to the position of each portion of said plurality of portions (P₁, P₂, ..., Pₙ) on said working plane (12),
**in that** it comprises a processing unit of detected data and images reconstruction configured to receive said data detected by said detection unit (2) for reconstructing the image of the positioning of said plurality of portions (P₁, P₂, ..., Pₙ) on said working plane (12),
**in that** said logic control unit is configured to receive said reconstructed image and to send control signals to said pick-up and transporting unit (3), said control signals containing information relating to the image and the position of each portion of said plurality of portions (P₁, P₂, ..., Pₙ) on said working plane (12), and
**in that** said working plane (12) comprises a scanning zone (12_{b}) made of transparent or semi-transparent material, in such a way that the light emitted by said plurality of light sources (22a, 22_{b}, 22c, ..., 22ₙ) can pass beyond said working plane (12) for radiating said plurality of panels (P₁, P₂, ..., Pₙ) and can be detected by said video camera (21) of said detection unit (2).

2. Machine (M) according to the preceding claim, **characterized in that** said processing unit of detected data and images reconstruction is comprised in said detection unit (2).

3. Machine (M) according to claim 1, **characterized in that** said processing unit of detected data and images reconstruction is comprised in said logic control unit.

4. Machine (M) according to anyone of the preceding claims, **characterized in that** said detection unit (2) of the positioning of said processed panel (P') is disposed downstream of said processing unit (1).

5. Machine (M) according to anyone of the preceding claims, **characterized in that** said detection unit (2) makes a linear scanning of said plurality of portions (P₁, P₂, ..., Pₙ) on said working plane (12).

6. Machine (M) according to the preceding claim, **characterized**
**in that** it comprises means to make said plurality of portions (P₁, P₂, ..., Pₙ) slide on said working plane (12), and
**in that** said detection unit (2) makes said linear scanning during the sliding of said plurality of portions (P₁, P₂, ..., Pₙ) on said working plane (12).

7. Machine (M) according to claim 5, **characterized**
**in that** it comprises means for the displacement of said detection unit (2) with respect to said working plane (12), and
**in that** said detection unit (2) makes said linear scanning during its displacement with respect to said working plane (12).

8. Machine (M) according to anyone of the preceding claims, **characterized in that** said pick-up and transporting unit (3) picks up each portion of said plurality of portions (P1, P2, ..., Pn), according to a predetermined orientation corresponding to said control signals received by said logic control unit.

9. Machine (M) according to anyone of the preceding claims, **characterized in that** said plurality of light sources (22a, 22_{b}, 22c, ..., 22ₙ) are configured to emit light through said scanning zone (12_{b}) to radiate said plurality of portions (P₁, P₂, ..., Pₙ), during the sliding over said scanning zone (12b).

10. Machine (M) according to the preceding claim, **characterized in that** said plurality of light sources (22a, 22_{b}, 22c, ..., 22ₙ) has a linear arrangement, in particular each light source (22ₓ₊₁) is disposed next to, immediately after, the previous light source (22ₓ).

11. Machine (M) according to anyone of the preceding claims, **characterized in that** said detection unit (2) comprises at least one camera (21) for scanning said plurality of portions (P₁, P₂, ..., Pₙ) configured to detect the coordinates of the center of each portion of said plurality of portions (P₁, P₂, ..., Pₙ) on said working plane (12) and the inclination angle of a predetermined side of each portion of said plurality of portions (P₁, P₂, ..., Pₙ) with respect to said cutting pattern.

12. Operation method of a machine (M), comprising a working plane (12), having a transparent or semi-transparent zone (12_{b}), for processing at least one panel (P), made in wood, plastic, metal, fiberglass, glass and the like, and for detecting the positioning of the processed panel (P') after the processing, using a detection unit (2), comprising a plurality of light sources (22a, 22_{b}, ..., 22c), comprising the following steps:
(a) dividing at least one panel (P) on a working plane (12) into a plurality of portions (P₁, P₂, ..., Pₙ), according to a predetermined cutting pattern;
(b) as soon as said processed panel (P') arrives close to said detection unit (2), the logic control unit activates the switching on of said plurality of light sources (22ₐ, 22_{b}, ..., 22_{c}) which radiate the surface of said processed panel (P'), passing beyond the working plane (12) in said transparent or semi-transparent zone (12_{b}).
(c) detecting a respective group of data relating to the position of each portion of said plurality of portions (P₁, P₂, ..., Pₙ) with respect to said cutting pattern;
(d) associating said group of data to each portion of said plurality of portions (P₁, P₂, ..., Pₙ);
(e) reconstructing an image relative to said plurality of portions (P₁, P₂, ..., Pₙ) on said working plane (12);
(f) selecting the sequence of portions of said plurality of portions (P₁, P₂, ..., Pₙ) to pick up from said working plane (12) and the orientation with which picking up each portion of said plurality of portions (P₁, P₂, ..., Pₙ), by a pick-up and transporting unit, in function of said image reconstructed in said step (e).

13. Method according to the preceding claim, **characterized in that** said group of data detected in said step (b) are the coordinates of the center of each portion of said plurality of portions (P₁, P₂, ..., Pₙ) on said working plane (12) and the inclination angle of a predetermined side of each portion of said plurality of portions (P₁, P₂, ..., Pₙ), with respect to said cutting pattern.

## Patentansprüche

1. Maschine (M) für die Bearbeitung zumindest einer Platte (P), aus Holz, Kunststoff, Metall, glasfaserverstärktem Kunststoff, Glas und dergleichen, und zur Erkennung der Positionierung der bearbeiteten Platte (P') nach der Bearbeitung, umfassend
eine Bearbeitungseinheit (1) für die zumindest eine Platte (P), die an ihrem Eingang die zumindest eine Platte (P) empfängt, und die an ihrem Ausgang eine Vielzahl von Abschnitten (P₁, P₂, ..., Pₙ) bereitstellt, in welche die ganze Platte (P) zuvor gemäß einer vorgegebenen Schnittvorlage aufgeteilt wurde;
eine Aufnahme- und Transporteinheit (3) für die Vielzahl von Abschnitten (P₁, P₂, ..., Pₙ), um die Vielzahl von Abschnitten (P₁, P₂, ..., Pₙ) aufzunehmen und die Vielzahl von Abschnitten (P₁, P₂, ..., Pₙ) zu einer oder mehreren weiteren Bearbeitungsstationen außerhalb der Maschine (M) zu befördern;
eine logische Steuereinheit, die mit der Bearbeitungseinheit (1) und der Aufnahme- und Transporteinheit (3) wirkverbunden ist, wobei die logische Steuereinheit mit einem Programm zur Steuerung der Bearbeitungseinheit (1) und der Aufnahme- und Transporteinheit (3) ausgestattet ist;
eine Arbeitsfläche (12) zur Auflage der zumindest einen Platte (P) und der bearbeiteten Platte (P'), die sich zwischen der Bearbeitungseinheit (1) und der Aufnahme- und Transporteinheit (3) erstreckt, wobei die Maschine (M) **dadurch gekennzeichnet ist,**
**dass** sie eine Erfassungseinheit (2) umfasst, die eine Vielzahl von Lichtquellen (22a, 22_{b}, 22c, ..., 22ₙ) und zumindest eine Videokamera (21) umfasst, die dafür konfiguriert ist, die auf die Position jedes Abschnittes der Vielzahl von Abschnitten (P₁, P₂, ..., Pₙ) auf der Arbeitsfläche (12) bezogenen Daten zu erfassen,
**dass** sie eine Einheit zur Verarbeitung der erfassten Daten und Rekonstruktion von Bildern umfasst, die dafür konfiguriert ist, die von der Erfassungseinheit (2) erfassten Daten zu empfangen, um das Bild der Positionierung der Vielzahl von Abschnitten (P₁, P₂, ..., Pₙ) auf der Arbeitsfläche (12) zu rekonstruieren,
**dass** die logische Steuereinheit dafür konfiguriert ist, das rekonstruierte Bild zu empfangen und Steuersignale an die Aufnahme- und Transporteinheit (3) zu senden, wobei diese Steuersignale Informationen in Bezug auf das Bild und die Position jedes Abschnittes der Vielzahl von Abschnitten (P₁, P₂, ..., Pₙ) auf der Arbeitsfläche (12) enthält, und
**dass** die Arbeitsfläche (12) einen Abtastbereich (12_{b}) umfasst, der aus einem durchsichtigen oder halbdurchsichtigen Material besteht, so dass das von der Vielzahl von Lichtquellen (22a, 22_{b}, 22c, ..., 22ₙ) ausgegebene Licht die Arbeitsfläche (12) durchströmen kann, um die Vielzahl von Platten (P₁, P₂, ..., Pₙ) zu bestrahlen, und von der Videokamera (21) der Erfassungseinheit (2) erfasst werden kann.

2. Maschine (M) nach dem vorhergehenden Anspruch, **dadurch gekennzeichnet, dass** die Einheit zur Verarbeitung der erfassten Daten und Rekonstruktion von Bildern in der Erfassungseinheit (2) enthalten ist.

3. Maschine (M) nach Anspruch 1, **dadurch gekennzeichnet, dass** die Einheit zur Verarbeitung der erfassten Daten und Rekonstruktion von Bildern in der logischen Steuereinheit enthalten ist.

4. Maschine (M) nach einem der vorhergehenden Ansprüche, **dadurch gekennzeichnet, dass** die Erfassungseinheit (2) zur Erkennung der Positionierung der bearbeiteten Platte (P') stromabwärts nach der Bearbeitungseinheit (1) angeordnet ist.

5. Maschine (M) nach einem der vorhergehenden Ansprüche, **dadurch gekennzeichnet, dass** die Erfassungseinheit (2) eine lineare Abtastung der Vielzahl von Abschnitten (P₁, P₂, ..., Pₙ) auf der Arbeitsfläche (12) ausführt.

6. Maschine (M) nach dem vorhergehenden Anspruch, **dadurch gekennzeichnet,**
**dass** sie Mittel für das Gleiten der Vielzahl von Abschnitten (P₁, P₂, ..., Pₙ) auf der Arbeitsfläche (12) umfasst, und
**dass** die Erfassungseinheit (2) die lineare Abtastung während des Gleitens der Vielzahl von Abschnitten (P₁, P₂, ..., Pₙ) auf der Arbeitsfläche (12) ausführt.

7. Maschine (M) nach Anspruch 5, **dadurch gekennzeichnet,**
**dass** sie Mittel zum Verschieben der Erfassungseinheit (2) relativ zu der Arbeitsfläche (12) umfasst, und
**dass** die Erfassungseinheit (2) die lineare Abtastung während des Verschiebens relativ zu der Arbeitsfläche (12) ausführt.

8. Maschine (M) nach einem der vorhergehenden Ansprüche, **dadurch gekennzeichnet, dass** die Aufnahme- und Transporteinheit (3) jeden Abschnitt der Vielzahl von Abschnitten (P1, P2, ..., Pn) gemäß einer vorgegebenen Ausrichtung aufnimmt, die den von der logischen Steuereinheit empfangenen Steuersignalen entspricht.

9. Maschine (M) nach einem der vorhergehenden Ansprüche, **dadurch gekennzeichnet, dass** die Vielzahl von Lichtquellen (22a, 22_{b}, 22c, ..., 22ₙ) dafür konfiguriert sind, Licht durch den Abtastbereich (12_{b}) hindurch auszugeben, um die Vielzahl von Abschnitten (P₁, P₂, ..., Pₙ) zu bestrahlen, während sie über den Abtastbereich (12_{b}) gleiten.

10. Maschine (M) nach dem vorhergehenden Anspruch, **dadurch gekennzeichnet, dass** die Vielzahl von Lichtquellen (22a, 22_{b}, 22c, ..., 22ₙ) eine lineare Anordnung aufweist, wobei insbesondere jede Lichtquelle (22ₓ₊₁) jeweils neben und direkt auf die vorhergehende Lichtquelle (22ₓ) folgend angeordnet ist.

11. Maschine (M) nach einem der vorhergehenden Ansprüche, **dadurch gekennzeichnet, dass** die Erfassungseinheit (2) zumindest eine Kamera (21) zur Abtastung der Vielzahl von Abschnitten (P₁, P₂, ..., Pₙ) umfasst, die dafür konfiguriert ist, die Koordinaten des Mittelpunktes jedes Abschnittes der Vielzahl von Abschnitten (P₁, P₂, ..., Pₙ) auf der Arbeitsfläche (12) zu erkennen und den Neigungswinkel einer vorgegebenen Seite jedes Abschnittes der Vielzahl von Abschnitten (P₁, P₂, ..., Pₙ) in Bezug auf die Schnittvorlage zu erkennen.

12. Arbeitsverfahren einer Maschine (M), umfassend eine Arbeitsfläche (12), die einen durchsichtigen oder halbdurchsichtigen Bereich (12_{b}) aufweist, für die Bearbeitung zumindest einer Platte (P) aus Holz, Kunststoff, Metall, glasfaserverstärktem Kunststoff, Glas und dergleichen, und zur Erkennung der Positionierung der bearbeiteten Platte (P') nach der Bearbeitung, unter Verwendung einer Erfassungseinheit (2), die eine Vielzahl von Lichtquellen (22a, 22_{b}, ..., 22c) umfasst, folgende Schritte umfassend:
(a) Aufteilen zumindest einer Platte (P) auf einer Arbeitsfläche (12) in eine Vielzahl von Abschnitten (P₁, P₂, ..., Pₙ) gemäß einer vorgegebenen Schnittvorlage;
(b) sobald die bearbeitete Platte (P') in der Nähe der Erfassungseinheit (2) ankommt, aktiviert die logische Steuereinheit das Einschalten der Vielzahl von Lichtquellen (22a, 22_{b}, ..., 22c), welche die Oberfläche der bearbeiteten Platte (P') mit ihrem Licht bestrahlen, das die Arbeitsfläche (12) in dem durchsichtigen oder halbdurchsichtigen Bereich (12_{b}) durchströmt.
(c) Erfassen einer entsprechenden Gruppe von Daten, betreffend die Position jedes Abschnittes der Vielzahl von Abschnitten (P₁, P₂, ..., Pₙ) in Bezug auf die Schnittvorlage;
(d) Zuordnen der Gruppe von Daten zu jedem Abschnitt der Vielzahl von Abschnitten (P₁, P₂, ..., Pₙ);
(e) Rekonstruieren eines Bildes bezogen auf die Vielzahl von Abschnitten (P₁, P₂, ..., Pₙ) auf der Arbeitsfläche (12);
(f) Auswählen der Sequenz von Abschnitten der Vielzahl von Abschnitten (P₁, P₂, ..., Pₙ), die von der Arbeitsfläche (12) aufzunehmen sind, und der Ausrichtung, mit der jeder Abschnitt der Vielzahl von Abschnitten (P₁, P₂, ..., Pₙ) von einer Aufnahme- und Transporteinheit, in Abhängigkeit von dem in Schritt (e) rekonstruierten Bild, aufzunehmen ist.

13. Verfahren nach dem vorhergehenden Anspruch, **dadurch gekennzeichnet, dass** die Gruppe von Daten, die in Schritt (b) erfasst werden, die Koordinaten des Mittelpunktes jedes Abschnittes der Vielzahl von Abschnitten (P₁, P₂, ..., Pₙ) auf der Arbeitsfläche (12) und der Neigungswinkel einer vorgegebenen Seite jedes Abschnittes der Vielzahl von Abschnitten (P₁, P₂, ..., Pₙ) in Bezug auf die Schnittvorlage sind.

## Revendications

1. Machine (M) pour usiner au moins un panneau (P), réalisé en bois, plastique, métal, fibre de verre, verre et similaires, et pour détecter le positionnement du panneau usiné (P') après l'usinage, comprenant
un groupe d'usinage (1) dudit au moins un panneau (P), qui reçoit ledit au moins un panneau (P), et qui produit une pluralité de portions (P₁, P₂, ..., Pₙ), obtenues en divisant le panneau entier (P), selon un schéma de coupe prédéfini ;
un groupe de prélèvement et de transport (3) de ladite pluralité de portions (P₁, P₂, ..., Pₙ), pour prélever ladite pluralité de portions (P₁, P₂, ..., Pₙ) et transporter ladite pluralité de portions (P₁, P₂, ..., Pₙ) vers une ou plusieurs autres stations d'usinage à l'extérieur de ladite machine (M) ;
une unité de commande logique opérationnellement reliée auxdits groupe d'usinage (1) et groupe de prélèvement et de transport (3), ladite unité de commande logique étant dotée d'un programme pour contrôler lesdits groupe d'usinage (1) et groupe de prélèvement et de transport (3) ;
un plan de travail (12), pour supporter ledit au moins un panneau (P) et ledit panneau usiné (P'), s'étendant entre lesdits groupe d'usinage (1) et groupe de prélèvement et de transport (3), ladite machine (M) étant **caractérisée**
**en ce qu'**elle comprend une unité de détection (2), comprenant une pluralité de sources lumineuses (22a, 22_{b}, 22c, ..., 22ₙ) et au moins une caméra vidéo (21), configurée pour détecter les données relatives à la position de chaque portion de ladite pluralité de portions (P₁, P₂, ..., Pₙ) sur ledit plan de travail (12),
**en ce qu'**elle comprend une unité de traitement des données détectées et de reconstruction d'images, configurée pour recevoir lesdites données détectées par ladite unité de détection (2) pour reconstruire l'image du positionnement de ladite pluralité de portions (P₁, P₂, ..., Pₙ) sur ledit plan de travail (12),
**en ce que** ladite unité de commande logique est configurée pour recevoir ladite image reconstruite et pour envoyer des signaux de commande audit groupe de prélèvement et de transport (3), lesdits signaux de commande contenant des informations relatives à l'image et à la position de chaque portion de ladite pluralité de portions (P₁, P₂, ..., Pₙ) sur ledit plan de travail (12), et
**en ce que** ledit plan de travail (12) comprend une zone de balayage (12_{b}) réalisée dans un matériau transparent ou semi-transparent, de manière à ce que la lumière émise par ladite pluralité de sources lumineuses (22a, 22_{b}, 22c, ..., 22ₙ) puisse traverser ledit plan de travail (12) pour irradier ladite pluralité de panneaux (P₁, P₂, ..., Pₙ) et puisse être détectée par ladite caméra vidéo (21) de ladite unité de détection (2).

2. Machine (M) selon la revendication précédente, **caractérisée en ce que** ladite unité de traitement des données détectées et de reconstruction d'images est comprise dans ladite unité de détection (2).

3. Machine (M) selon la revendication 1, **caractérisée en ce que** ladite unité de traitement des données détectées et de reconstruction d'images est comprise dans ladite unité de commande logique.

4. Machine (M) selon l'une quelconque des revendications précédentes, **caractérisée en ce que** ladite unité de détection (2) du positionnement dudit panneau usiné (P') est disposée en aval dudit groupe d'usinage (1).

5. Machine (M) selon l'une quelconque des revendications précédentes, **caractérisée en ce que** ladite unité de détection (2) effectue un balayage linéaire de ladite pluralité de portions (P₁, P₂, ..., Pₙ) sur ledit plan de travail (12).

6. Machine (M) selon la revendication précédente, **caractérisée**
**en ce qu'**elle comprend des moyens destinés à faire coulisser ladite pluralité de portions (P₁, P₂, ..., Pₙ) sur ledit plan de travail (12), et
**en ce que** ladite unité de détection (2) effectue ledit balayage linéaire pendant le coulissement de ladite pluralité de portions (P₁, P₂, ..., Pₙ) sur ledit plan de travail (12).

7. Machine (M) selon la revendication 5, **caractérisée**
**en ce qu'**elle comprend des moyens pour le déplacement de ladite unité de détection (2) par rapport audit plan de travail (12), et
**en ce que** ladite unité de détection (2) effectue ledit balayage linéaire pendant son déplacement par rapport audit plan de travail (12).

8. Machine (M) selon l'une quelconque des revendications précédentes, **caractérisée en ce que** ledit groupe de prélèvement et de transport (3) prélève chaque portion de ladite pluralité de portions (P1, P2, ..., Pn), selon une orientation prédéfinie correspondant auxdits signaux de commande reçus de ladite unité de commande logique.

9. Machine (M) selon l'une quelconque des revendications précédentes, **caractérisée en ce que** ladite pluralité de sources lumineuses (22ₐ, 22_{b}, 22_{c}, ..., 22ₙ) est configurée pour émettre de la lumière à travers ladite zone de balayage (12_{b}) pour irradier ladite pluralité de portions (P₁, P₂, ..., Pₙ), pendant le coulissement sur ladite zone de balayage (12_{b}).

10. Machine (M) selon la revendication précédente, **caractérisée en ce que** ladite pluralité de sources lumineuses (22a, 22_{b}, 22c, ..., 22ₙ) a une disposition linéaire, en particulier chaque source lumineuse (22ₓ₊₁) est disposée à côté de, juste après, la source lumineuse précédente (22ₓ).

11. Machine (M) selon l'une quelconque des revendications précédentes, **caractérisée en ce que** ladite unité de détection (2) comprend au moins une caméra (21) pour le balayage de ladite pluralité de portions (P₁, P₂, ..., Pₙ), configurée pour détecter les coordonnées du centre de chaque portion de ladite pluralité de portions (P₁, P₂, ..., Pₙ) sur ledit plan de travail (12) et l'angle d'inclinaison d'un côté prédéfini de chaque portion de ladite pluralité de portions (P₁, P₂, ..., Pₙ) par rapport audit schéma de coupe.

12. Procédé de fonctionnement d'une machine (M), comprenant un plan d'usinage (12), ayant une zone transparente ou semi-transparente (12_{b}), pour usiner au moins un panneau (P), réalisé en bois, plastique, métal, fibre de verre, verre et similaires, et pour détecter le positionnement du panneau usiné (P') après l'usinage, en utilisant une unité de détection (2), comprenant une pluralité de sources lumineuses (22ₐ, 22_{b}, ..., 22_{c}), comprenant les étapes suivantes :
(a) diviser au moins un panneau (P) sur un plan de travail (12) en une pluralité de portions (P₁, P₂, ..., Pₙ), selon un schéma de coupe prédéfini ;
(b) dès que ledit panneau usiné (P') arrive à proximité de ladite unité de détection (2), l'unité de commande logique active la mise en marche de ladite pluralité de sources lumineuses (22ₐ, 22_{b}, ..., 22_{c}) qui irradient la surface dudit panneau usiné (P'), en traversant le plan de travail (12) dans ladite zone transparente ou semi-transparente (12_{b}).
(c) détecter un groupe respectif de données relatives à la position de chaque portion de ladite pluralité de portions (P₁, P₂, ..., Pₙ) par rapport audit schéma de coupe ;
(d) associer ledit groupe de données à chaque portion de ladite pluralité de portions (P₁, P₂, ..., Pₙ) ;
(e) reconstruire une image relative à ladite pluralité de portions (P₁, P₂, ..., Pₙ) sur ledit plan de travail (12) ;
(f) sélectionner la séquence de portions de ladite pluralité de portions (P₁, P₂, ..., Pₙ) à prélever dudit plan de travail (12) et l'orientation avec laquelle prélever chaque portion de ladite pluralité de portions (P₁, P₂, ..., Pₙ), au moyen d'un groupe de prélèvement et de transport, en fonction de ladite image reconstruite lors de ladite étape (e).

13. Procédé selon la revendication précédente, **caractérisé en ce que** ledit groupe de données détectées lors de ladite étape (b) sont les coordonnées du centre de chaque portion de ladite pluralité de portions (P₁, P₂, ..., Pₙ) sur ledit plan de travail (12) et l'angle d'inclinaison d'un côté prédéfini de chaque portion de ladite pluralité de portions (P₁, P₂, ..., Pₙ), par rapport audit schéma de coupe.
